# EUROPÄISCHE PATENTSCHRIFT

(11) **EP 1 681 549 B1**
(45) Veröffentlichungstag und Bekanntmachung des Hinweises auf die Patenterteilung: **11.03.2015**
(21) Anmeldenummer: 05026172.6
(22) Anmeldetag: 01.12.2005
(51) Int. Cl.: G01N 15/06

(54) **Verfahren und Vorrichtung zum Zählen von Partikeln in einer Gasströmung**
Method and device for counting particles in a gas flow
Procédé et dispositif de comptage de particules dans un flux de gas

(30) Priorität: 15.01.2005 DE 102005001992
(43) Veröffentlichungstag der Anmeldung: 19.07.2006
(73) Patentinhaber: Palas GmbH Partikel-und Lasermesstechnik, 76229 Karlsruhe (DE)
(72) Erfinder: Mölter, Leander, 76744 Wörth (DE); Munzinger, Friedrich, 75053 Gondelsheim (DE)
(74) Vertreter: Lempert, Jost

(56) Entgegenhaltungen:
- WO-A-02/29382
- WO-A-89/08245
- US-A- 3 738 751
- US-A- 5 903 338

## Beschreibung

Die Erfindung betrifft ein Verfahren und eine Vorrichtung zum Zählen von Partikeln nach dem Oberbegriff des Anspruchs 1 bzw. des Anspruchs 14.

In vielen gasförmigen Trägern, wie Luft, Abgasen oder dergleichen, finden sich Teilchen, die eine geringere Größe haben, als dass sie unmittelbar und direkt durch herkömmliche Detektionseinrichtungen, wie Teilchenzähler oder Aerosolspektrometer erfasst werden können. Die Erfassung dieser Teilchen ist aber wichtig, da sie einen erheblichen Einfluss, beispielsweise in der Atemluft auf die Gesundheit, die Wirksamkeit und Standdauer von Filtern haben können. Damit solche Teilchen erfasst werden können, werden sie durch Ankondensation von Dampf, wobei sie als Kondensationskerne fungieren, "vergrößert".

Üblicherweise ist ein Vorratsgefäß mit einer zu verdampfenden Substanz vorgesehen. Die Substanz wird mit Hilfe eines porösen Materials, wie Filz, etc. in eine Befeuchterstrecke gebracht, in der die Substanz verdampft. Danach wird das zu messende Aerosol mit dem Dampf in ein Kondensationsrohr geleitet und der Dampf kondensiert an den Aerosolpartikeln und vergrößert diese. Es kann hierbei mit externer Kühlung, gegebenenfalls auch mit Aerosolinjektion oder mit turbulenter Mischung gearbeitet werden. Die Vorrichtung und damit auch das Verfahren zur "Vergrößerung" sind empfindlich.

Weiterhin werden optische Aerosolspektrometer, vorzugsweise durch monodisperse Tröpfchen im Bereich von 0,2 bis 8 µm kalibriert. Zur Erzeugung solcher Teilchen wird ein Sinclair-LaMer-Generator verwendet. Hierbei werden zunächst sehr kleine Partikel, mit einem Durchmesser kleiner 100 Nanometer, als Kondensationskerne generiert und durch eine beheizte, gesättigte Dampfatmosphäre geleitet, dieses Dampf-Partikelgemisch wird dann durch ein gekühltes Kondensationsrohr geleitet, in dem die Dampfsubstanz am Kern kondensiert. Die genannten Vorrichtungen des Verfahrens sind sehr aufwändig und auch anfällig, insbesondere wenn bestimmte genaue Partikelgrößen gewünscht werden.

Die US 5 903 338 zeigt einen Kondensationskernzähler zur Messung der Größe und Zahl kleiner Teilchen. Ein Gasstrom wird durch eine Arbeitsflüssigkeit gesättigt und in einer Wachstumskammer mit einem Prüfgasgemisch, welches eine niedrigere Temperatur aufweist, wodurch eine Übersättigung des gemischten Gases mit Arbeitsflüssigkeit entsteht. Die Sättigung des ersten Gases mit Arbeitsflüssigkeit erfolgt in einer inneren Kammer, um deren Umfang Nafion-Rohre verteilt sind, durch die die Flüssigkeit geführt wird und durch deren Nafion-Wandung die Flüssigkeit hindurch in den Gasraum tritt. Nachteilig ist, dass durch noch mehr Druck Liquidenflüssigkeiten wie Wasser bearbeitet werden kann, die durch das Nafion hindurch defundieren können, beispielsweise aber nicht mit höheren Viskosen oder erhitzten Flüssigkeiten. Darüber hinaus kann nur mit relativ geringen Temperaturen gearbeitet werden, da das Nafion als sulfoniertes PTFE ein Kunststoff ist und daher nur Arbeitstemperaturen, wie sie bei Kunststoffen üblich sind, vertragen kann.

Alternativ sieht die Druckschrift vor, dass offenbar die Flüssigkeit lediglich durch den Bodenbereich der Verdampfungskammer gepumpt wird, wodurch zum einen die Länge des Flüssigkeitsweges in der Kammer beschränkt ist, zum anderen notwendigerweise über die Höhe der Kammer hin ein hoher Temperaturgradient der verdampften Flüssigkeit (des Flüssigkeitsdampfes) gegeben ist und damit sich in der Kammer höchst instabile Sättigungsverhältnisse einstellen, was noch tragbar sein mag, wenn, wie dies bei dem Gegenstand dieser Druckschrift der Fall ist, lediglich ein Gas mit verdampfter Flüssigkeit gesättigt werden soll, in der Verdampfungskammer aber selbst keine Kondensation an Kernen erfolgen soll.

Die US 3 738 751 zeigt einen Kondensationskernmesser mit einer inneren Kondensationskammer, durch die Gas geführt wird. Die diese Kammer bildende Röhre ist auf ihrer Außenseite mit Filz belegt, der am unteren Ende in ein Flüssigkeitsreservoir eintaucht. In den Raum wird Umgebungsgas geleitet und befeuchtet und dieses tritt am oberen Ende in die innere Kondensationskammer über.

Nachteilig ist auch hier, dass die Flüssigkeit durch poröses filzartiges Material geleitet und aus dieser heraus verdunstet wird.

Die WO 02/29382 A1 betrifft einen Kondensationsteilchenzähler, mit dem die Zahl ultrafeiner Teilchen gezählt werden soll, in dem diese durch einen Kondensationsprozess praktisch vergrößert werden. In einer Kapillare wird Dampf einer Arbeitsflüssigkeit kompensiert, wodurch die Teilchen wachsen. Ein Isolationsmaterial umgibt die Kapillare, um einen Gangfluss zwischen der Kapillare und der Umgebung zu behindern. Hierzu ist eine Saturator mit einem Absorptionsmaterial über seinen Umfang hin ausgekleidet, welches mit einem Flüssigkeitsreservoir in Verbindung steht. Dem Saturator folgen Kapillare nach, in dem der Alkohol an den Teilchen kondensiert.

Die WO 89/08245 zeigt eine Vorrichtung zum Vergrößern von Aerosolteilchen, bei der ein Aerosol durch einen horizontal gerichteten Zylinderraum strömt, in dessen Bodenbereich eine ruhende Flüssigkeit verdampft wird. Das Aerosol tritt in einen Kondensator ein, in dem der Dampf an den Teilchen kondensiert, wodurch sie sichtbarer werden. Die Vorrichtung dient zur Messung der Konzentration von Verschmutzungsteilchen in der Atmosphäre.

Der Erfindung liegt daher die Aufgabe zugrunde, ein Verfahren und eine Vorrichtung zum Zählen von Partikeln zu schaffen, die einfach, zuverlässig und unempfindlich sind.

Erfindungsgemäß wird die genannte Aufgabe mit einem Verfahren der eingangs genannten Art gelöst, das die kennzeichnenden Merkmale des Anspruchs 1 aufweist.

Weiterhin sieht die Erfindung zur Lösung der genannten Aufgabe eine Vorrichtung mit den Merkmalen des Anspruchs 14 vor.

Durch die Erfindung werden gegenüber dem Stand der Technik eine Reihe von Vorteilen erreicht, so ist ein Dauerbetrieb über Monate hin möglich. Es können unterschiedlichste Substanzmaterialien, wie Wasser, Alkohole, Öle oder dergleichen verwendet werden. Eine automatische Aktivierung und Deaktivierung der Zufuhr der zu verdampfenden Flüssigkeit ist möglich, ebenso eine einfache und schnelle Regelung der Dampfmenge. Darüber hinaus ist die Reinigung der erfindungsgemäßen Einrichtung in einfacher Weise durchführbar. Weiterhin kann die erfindungsgemäße Einrichtung als geschlossenes System ausgebildet sein, wodurch eine Unabhängigkeit vom Umgebungsdruck gegeben ist und die erfindungsgemäße Einrichtung bei Über- und Unterdruck einsetzbar und das Verfahren dementsprechend durchführbar ist.

Gemäß einer bevorzugten Ausgestaltung des Verfahrens ist vorgesehen, dass das Gas und auch die Kondensationskerne zumindest mit einer Bewegungskomponente von oben nach unten durch die Verdampfungszone und einen nachfolgenden Kondensationskamin bewegt werden, wobei insbesondere das Gas und auch die Kondensationskerne durch die im Wesentlichen vertikal ausgerichtete Verdampfungszone und gegebenenfalls den Kondensationskamin bewegt werden. Hierzu sieht die erfindungsgemäße Einrichtung vor, dass ein Einlass für das Gas in den Strömungsraum an der Oberseite desselben angeordnet ist, wobei insbesondere auch der Strömungsraum und gegebenenfalls der Kondensationskamin senkrecht ausgerichtet und ersterer oberhalb letzterem angeordnet ist.

Durch diese Ausgestaltung wird die Voraussetzung geschaffen, dass die durch Aufkondensation vergrößerten Partikel, der Ausgangsgröße im Nano-Bereich, bei beispielsweise kleiner 100 mm liegt, sich durch Schwerkraft durch die Verdampfungszone und durch einen Aerosolspektrometer bewegen können.

Demgemäß ist in einer weiteren bevorzugten Ausgestaltung des erfindungsgemäßen Verfahrens vorgesehen, dass die zu verdampfende Flüssigkeit schraubenförmig um den Strömungsraum herumgeführt wird, wobei hierzu die erfindungsgemäße Einrichtung derart ausgestaltet ist, dass der Flüssigkeitskanal als schraubenförmige Rinne um den Strömungsraum angeordnet ist. Weiterhin kann in diesem Zusammenhang vorgesehen sein, dass der Einlass der zu verdampfenden Flüssigkeit in die Verdampfungszone oberhalb eines Austrittes für nicht in der Verdampfungszone verdampfte Flüssigkeit angeordnet ist.

Durch eine schraubenförmige Ausbildung des die zu verdampfende Flüssigkeit führenden Kanals wird zum einen der Weg der Flüssigkeit in der Verdampfungszone maximiert und zum anderen die Fließgeschwindigkeit reduziert, so dass eine lange Aufenthaltsdauer von der zu verdampfenden Flüssigkeit in der Verdampfungszone erzielt wird.

In weiteren bevorzugten Ausgestaltungen der Erfindung kann vorgesehen sein, dass die zu verdampfende Flüssigkeit aus einem Vorratsreservoir mittels einer Pumpe in den Strömungsraum gefördert wird, wobei die Vorrichtung hierzu derart ausgebildet ist, dass der Einlass der Flüssigkeit in den Flüssigkeitskanal oberhalb des Auslasses für nicht verdampfte Restflüssigkeit angeordnet ist und insbesondere, dass dem Einlass für die im Strömungsraum zu verdampfende Flüssigkeit ein Flüssigkeitsreservoir sowie eine Pumpe vorgeordnet sind.

Hierdurch wird ein kontinuierlicher Umlauf der zu verdampfenden Substanz erreicht. Die Funktion der erfindungsgemäßen Einrichtung in bevorzugter konkreter Ausgestaltung ist derart, dass die zu verdampfende Flüssigkeit zum Einlass der schraubenförmigen Rinne gefördert wird und die Flüssigkeit dann langsam in der Rinne nach unten läuft und dabei durch eine einwirkende Heizung verdampft. Nicht verdampfte Substanz kann über eine Rückführung wieder zu einem Vorratsbehälter rückgeführt werden. Die Pumpe kann daher mehr Flüssigkeit fördern, als zu einer hundertprozentigen Sättigung benötigt wird. Der Vorratsbehälter ist fest verschlossen, wodurch der genannte geschlossene Kreislauf gebildet wird. Durch entsprechende Einstellung der Temperatur ist auch eine Messung im Über- und Unterdruck möglich.

Wesentliche Vorteile der erfindungsgemäßen Vorrichtung sind freier Durchgang, sehr gute Durchmischung, einstellbare Dampfmenge durch Temperatur und Fördermenge (Pumpe), Rücklauf der überschüssigen Substanz durch Rücklauf und dicht verschlossene Vorratsbehälter. Weiter ist die Dampfmenge nicht abhängig von Dampfdruck, da durch Überhitzung und Förderung durch eine Pumpe eine Übersättigung erreichbar ist. Der Flüssigkeitsstrom ist einfach einstellbar, so dass die Dampfmenge schnell geändert werden kann. Die Art der Flüssigkeit, wie insbesondere Isopropanol, Butanol oder dergleichen kann vom Nutzer nicht geändert werden.

Das erfindungsgemäße Verfahren und die erfindungsgemäße Vorrichtung zum Kondensieren von Dampf an Kondensationskernen bieten eine Reihe von Einsatzmöglichkeiten. So ist im Rahmen der Erfindung ein Verfahren zum Erzeugen von monodispersem Aerosol vorgesehen, bei dem Kondensationskerne vorgegebener definierter Konzentration erzeugt werden und Dampf entsprechend dem erfindungsgemäßen Verfahren zum Kondensieren von Dampf an Kondensationskernen an diesen kondensiert. Eine entsprechende Vorrichtung zum Erzeugen eines monodispersen Aerosols sieht vor, dass einem Aerosolgenerator mindestens eine erfindungsgemäße Vorrichtung zur Kondensation von Dampf an Kondensationskernen nachgeordnet ist. In dieser Ausgestaltung bildet das erfindungsgemäße Verfahren und die erfindungsgemäße Vorrichtung die Vorteile, dass eine schnelle Partikelgrößeneinstellung ohne einen Bypass um einen Satorator möglich ist, da die Partikelgröße unmittelbar über die Dampfmenge, die direkt durch die Fördermenge der Pumpe schnell gesteuert werden kann. Herstellung der Vorrichtung und Handling der Vorrichtung und des erfindungsgemäßen Verfahrens sind einfach. Ein Reheater ist nicht erforderlich.

In einer bevorzugten Ausgestaltung des erfindungsgemäßen Verfahrens kann vorgesehen sein, dass in Reihe wiederholt, insbesondere zweimal, Dampf zur Kondensation an Kondensationskernen erzeugt wird, wobei eine erfindungsgemäße Vorrichtung demgemäß derart ausgebildet ist, dass mehrere, vorzugsweise zwei erfindungsgemäße Vorrichtungen zur Kondensation von Dampf an Kondensationskernen hintereinander in Reihe angeordnet sind. Durch die Kaskadierung von Verdampfungseinheiten können größere Partikel durch mehrfache Anlagerung von Dampf durch Kondensation an Partikeln hergestellt werden. Es können damit auch Partikel aus unterschiedlichen Materialien erzeugt werden, indem in den zwei oder mehreren aufeinanderfolgenden Verdampfungseinheiten unterschiedliche zu verdampfende Flüssigkeiten eingesetzt werden. Durch die Kaskadierung der Verdampfungseinheit können Partikel aus unterschiedlichen Materialien hergestellt werden. Mit dem erfindungsgemäßen Verfahren ist eine hundertprozentige Sättigung des Dampfes in jeder weiteren Verdampfereinheit möglich, da der Trägergasvolumenstrom gleich bleibt.

In höchst vorteilhafter Weise sieht die Erfindung weiterhin ein Verfahren zum Zählen von Teilchen geringen Durchmessers vor, das dadurch gekennzeichnet ist, dass Partikel in einer Gasströmung gezählt werden, dass anschließend Dampf kondensiert und an den die Kondensationskerne bildenden Partikeln kondensiert, insbesondere nach dem erfindungsgemäßen Verfahren zur Kondensation von Dampf an Kondensationskernen, dass die mit Kondensat versehenen Kondensatteilchen nach der Kondensation von Dampf zu diesen gezählt werden, und dass die Differenz der vor- und nach Kondensation gezählten Teilchenmengen gebildet wird, um derart die Partikel im einströmenden Aerosol unterhalb einer messbaren Grenze zu bestimmen. Die Erfindung sieht in diesem Zusammenhang weiterhin eine Vorrichtung zum Zählen von Teilchen geringen Durchmessers mit zwei Partikelzählern, gegebenenfalls in Form von Aerosolspektrometern vor, die dadurch gekennzeichnet ist, dass einem ersten Partikelzähler eine erfindungsgemäße Vorrichtung zum Kondensieren von Dampf an Kondensationskernen nachgeordnet und dieser wiederum ein weiterer Partikelzähler nachgeordnet ist. Hierdurch kann durch Differenzbildung der gezählten Partikel vor und der Kondensatteilchen nach der Kondensation auch die Anzahl kleinster Teilchen erfasst werden, deren Größe als solche unterhalb der üblichen Detektionsgrenze liegt. Soweit zumindest als im Strom erstangeordneter Zähler ein Aerosolspektrometer vorgesehen ist, können auch die Teilchen größeren Durchmessers hinsichtlich ihrer Verteilung erfasst werden.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert ist. Dabei zeigt bzw. zeigen:
- Fig. 1: eine erfindungsgemäße Vorrichtung als Luftbefeuchter mit freiem Durchgang;
- Fig. 2a u. 2b: in vergrößerter Darstellung Querschnittsformen von die Verdampfungsflüssigkeit führenden Kanälen bei A der Fig. 3;
- Fig. 3: eine erfindungsgemäße Vorrichtung zur Kondensation von Dampf an Kondensationskernen mit einer anschließenden Partikelzähleinrichtung;
- Fig. 4: eine erfindungsgemäße Vorrichtung in einstufiger Anordnung als Teil eines monodispersen Aerosolgenerators;
- Fig. 5: eine erfindungsgemäße Vorrichtung in kaskadierter Anordnung als Teil eines monodispersen Aerosolgenerators; und
- Fig. 6: eine erfindungsgemäße Vorrichtung zur Kondensation von Dampf an Kondensationskernen mit einem zusätzlichen Aerosolspektrometer am Eingang. Durch die Differenzbildung der gewählten Ereignisse aus den Aerosolspektrometerergebnissen kann die Anzahl der aufkondensierten Partikel unterhalb der unteren Nachweisgrenze der Aerosolspektrometer eindeutig bestimmt werden.

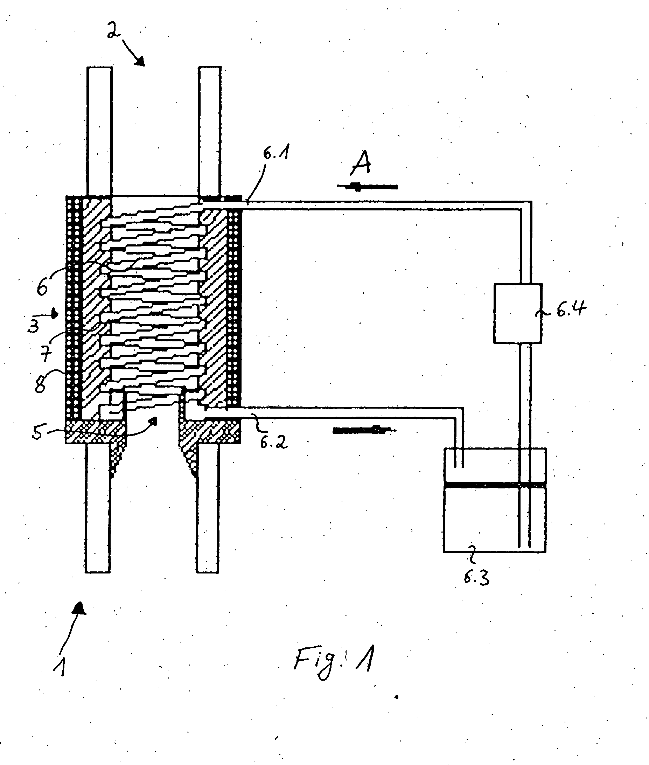

Die erfindungsgemäße Einrichtung 1 zum Befeuchten von Dampf (Fig. 1) weist zunächst im Anschluss an einen Einlass 2 eine Verdampfungszone 3 auf.

Die Verdampfungszone 3 hat einen einen Strömungsraum bildenden länglichen Durchlass 5, der rohrförmig ausgebildet ist und insbesondere zylindrisch (mit einem kreisförmigen Querschnitt) ist, aber auch eine andere Kontur aufweisen kann, beispielsweise elliptischen, ovalen, quadratischen oder rechteckigen Querschnitt.

Um den Durchlass 5 herum ist ein zum Durchlass 5 hin offener Kanal 6 geführt, der im dargestellten Ausführungsbeispiel schraubenförmig ausgeführt ist und in der Wandung 7 des Durchlasses 5 ausgebildet ist, die hier eine Zylindermantelwandung ist. Der Kanal 6 ist nicht porös, sondern insbesondere glatt ausgebildet. Der Kanal 6 ist beheizt, wobei im dargestellten Ausführungsbeispiel die Wandung 7 von einer Heizeinrichtung 8 umgeben ist, die im dargestellten Ausführungsbeispiel wiederum die Form eines Zylindermantels hat und eng an der Wandung 7 anliegt. Die Wandung 7 besteht aus gut wärmeleitendem Material, wie Metall. Die Heizung kann in üblicher Weise ausgebildet sein, beispielsweise durch Widerständsdrähte, Heiß- oder Kaltleiter in Drahtform oder keramischer Form. Elektrischer Kontakt zwischen der Wandung 7 und den Heizungselementen, wie Heizungsdrähten, ist durch eine Isolierschicht (nicht dargestellt) verhindert.

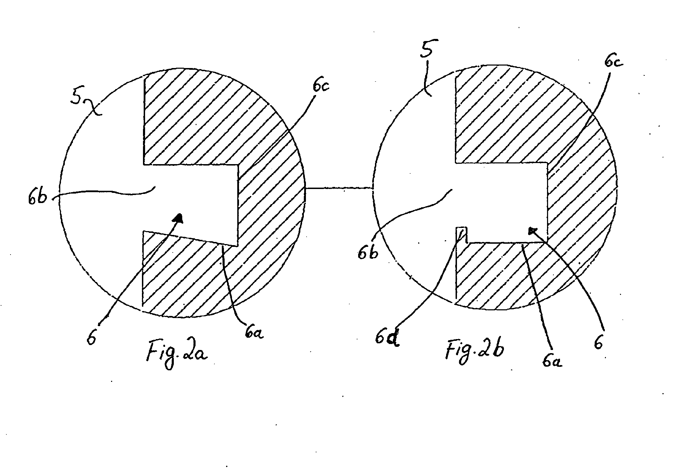

Der Kanal 6 kann vorzugsweise als offene Rinne ausgebildet sein. Sein Boden 6a kann dabei geneigt sein von seiner zum Strömungsraum 5 hin offenen Seite 6b abwärts zu seiner dem Strömungsraum abgewandten Wandung 6c (Fig. 2a). Alternativ kann auf der dem Strömungsraum zugewandten Seite 6b vom Boden aus eine lediglich einen Teil der Höhe des Kanals hohe Wandung 6d ausgebildet sein (Fig. 2b). Der Kanal 6 ist über einen Kanaleinlass 6.1 und einen Kanalauslass 6.2 mit einem Flüssigkeitsreservoir 6.3 und mit einer die Flüssigkeit aus diesem zum Flüssigkeitseinlass 6.1 fördernden Pumpe 6.4 versehen. Die Anordnung ist derart, dass der Flüssigkeitseinlass 6.1 oberhalb des Flüssigkeitsauslasses 6.2 angeordnet ist, vorzugsweise ist die gesamte erfindungsgemäße Vorrichtung vertikal angeordnet. Die Flüssigkeit fließt daher unter Schwerkraft durch den schraubenförmigen Kanal 6 und verdampft unter Einwirkung der Heizung 8 in den Durchlassraum 5 der durch den Einlass 2 in diesen eintretenden und durch diesen strömenden Kondensationskerne bildenden Partikel.

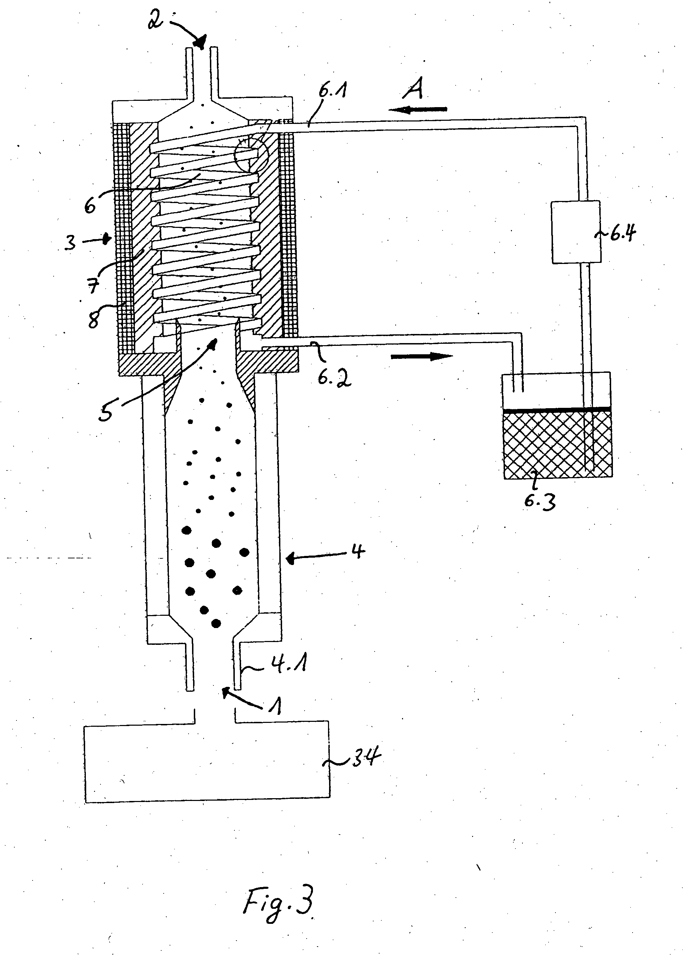

Bei der in Fig. 3 dargestellten Vorrichtung zur Kondensation von Dampf am Kondensationskern schließt sich an den Durchlass 5 ein Kondensationskamin 4 an. Schon im Durchlass 5, insbesondere im Kondensationskamin 4, kondensiert der in der Verdampfungszone 3 erzeugte Dampf an den Kondensationskernen und bildet an und mit diesen am Auslass 4.1 größere Kondensatteilchen, als es die am Einlass 2 eintretenden Kondensationskerne sind. Die Heizleistung und Mindestfördermenge der Pumpe können derart aufeinander abgestimmt werden, dass in der Verdampfungszone auch eine hundertprozentige Sättigung des Dampfes eingestellt werden kann. Unverdampfte Flüssigkeit fließt durch den Auslass 6.2 zurück in den Vorratsbehälter 6.3. Die aufkondensierte Partikelgröße ist von der Dampfkonzentration abhängig.

Zusammen mit einer an den Auslass 4.1 angeschlossenen Partikelzähleinrichtung 11 bildet die erfindungsgemäße Vorrichtung einen Kondensationskernzähler zum Zählen von Aerosolpartikeln, die als Kondensationskerne fungieren und die insbesondere kleiner sein können, als dass sie als solche von der Partikelzähleinrichtung 11 erfasst werden können, indem die eintretenden Aerosolpartikel durch Kondensation der verdampften Flüssigkeit an den Kernen zu größeren Kondensationsteilchen vergrößert werden, die dann von dem Partikelzähler erkannt und gezählt werden können. Die Aerosolkerne können Feststoff- oder Flüssigkeitsteilchen sein. Sie können aus der Umgebungsluft angesaugt oder aber auch von dem Auslass einer Verbrennungskraftmaschine, einem Brenner oder dergleichen dem Einlass 2 zugeführt werden, um derart die Partikelkonzentration in der im Einlass 2 eintretenden Luft oder einem eintretenden Gas zu zählen.

Die Aerosolkonzentration ist unterschiedlich (sie soll gemessen werden). Die Heizung ist auf das zu verdampfende Material angepasst. Die Pumpe ist auf eine Mindestfördermenge eingestellt, somit stellt sich in der Verdampfungszone hundertprozentige Sättigung ein (abhängig von der Temperatur). Das restliche unverdampfte Material fließt durch Rücklauf in Vorratsbehälter zurück. Die Partikelgröße ändert sich mit der Aerosolkonzentration.

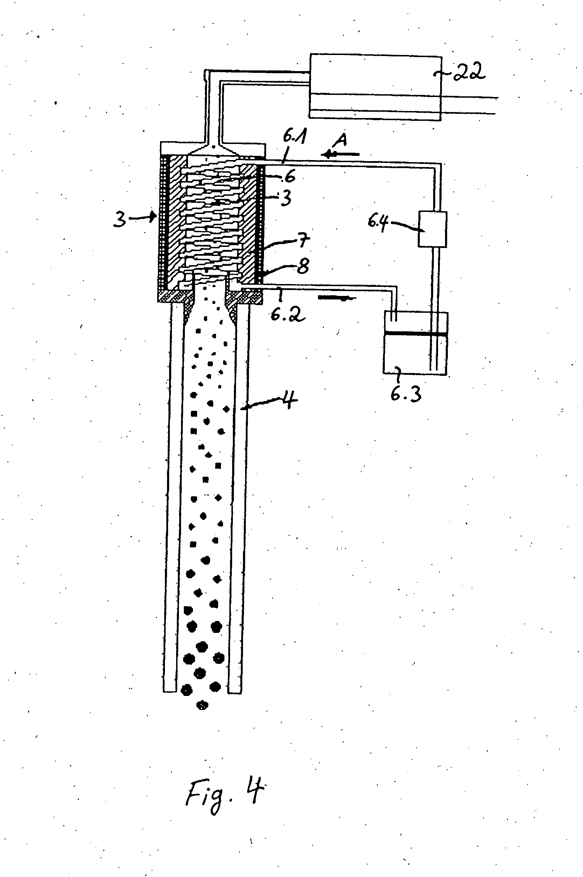

Ein zweites Einsatzgebiet der erfindungsgemäßen Vorrichtung liegt in der Kalibrierung von Aerosolspektrometereinheiten. Hierzu kann grundsätzlich an den Einlass 2 der Vorrichtung der Fig. 1 ein Aerosolgenerator angeschlossen werden, der Kondensationskerne mit einer konstanten Konzentration erzeugt (Fig. 4). An den Auslass wird dann die Aerosolspektrometereinheit angeschlossen.

Ein einstufiger monodisperser Aerosolgenerator ist in der Fig. 4 dargestellt. Gleiche Teile sind mit gleichen Bezugszeichen versehen und zur Beschreibung wird insofern auf die Beschreibung der Fig. 1 und 3 verwiesen. Der monodisperse Aerosolgenerator 21 der Fig. 4 weist eine Kernquelle 22 zur Erzeugung von Kondensationskernen, vorzugsweise mit Durchmessern kleiner 100 Nanometer und mit konstanter Konzentration auf. Der Kernquelle 22 schließt sich eine Einrichtung 1 in der unter Bezug auf die Fig. 1 beschriebenen Ausgestaltung an. Die Einrichtung 1 besteht im Wesentlichen aus Verdampfungszone 3 und Kondensationskamin 4. An letzteren schließt sich dann die zu kalibrierenden Aerosolspektrometereinheit (selbst nicht dargestellt) an.

Die erzeugte Aerosolkonzentration ist konstant und wird durch die Rate der durch die Kernquelle 22 erzeugten Kondensationskerne bestimmt. Die Temperatur der Heizung 8 liegt über dem Siedepunkt der zu verdampfenden Flüssigkeit. Die Größe der Kondensatteilchen wird nur über die Dampfmenge bestimmt und ändert sich mit dieser. Demgemäß kann die Kalibrierung der Aerosolspektrometereinheit über einen weiten Teilchengrößenbereich hin erfolgen, der mit der Pumpe eingestellt werden kann.

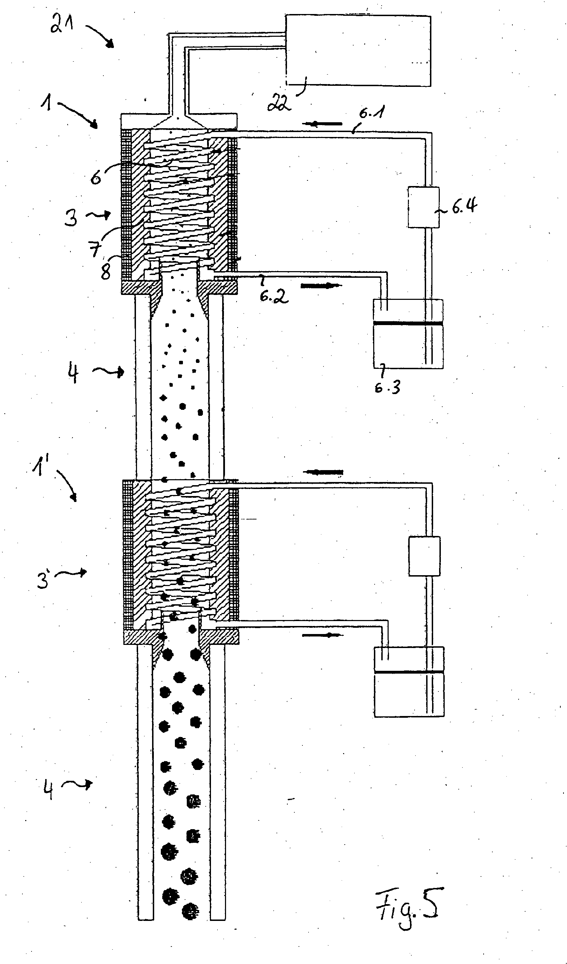

Die Fig. 5 zeigt einen monodispersen Aerosolgenerator in kaskadierter Form mit zwei erfindungsgemäßen Verdampfungseinrichtungen. An eine erste Verdampfungseinrichtung 1 gemäß Fig. 1 schließt sich eine zweite Einrichtung 1'an, die ebenfalls in der unter Bezug auf Fig. 1 beschriebenen Weise ausgebildet ist. Weiter weist auch diese Vorrichtung eine vorgeordnete Kernquelle 22 auf. Ansonsten gilt das zur einstufigen Ausgestaltung der Fig. 4 Gesagte.

Für beide Ausgestaltungen gilt: Die Aerosolkonzentration ist konstant. Die Partikelgröße wird nur über die Dampfmenge gesteuert. Die Temperatur der Heizung liegt über der Siedetemperatur des zu verdampfenden Materials. Der Kondensationskamin ist länger, da aus höheren Temperaturen abgekühlt wird. Die Partikelgröße ändert sich mit der Dampfmenge.

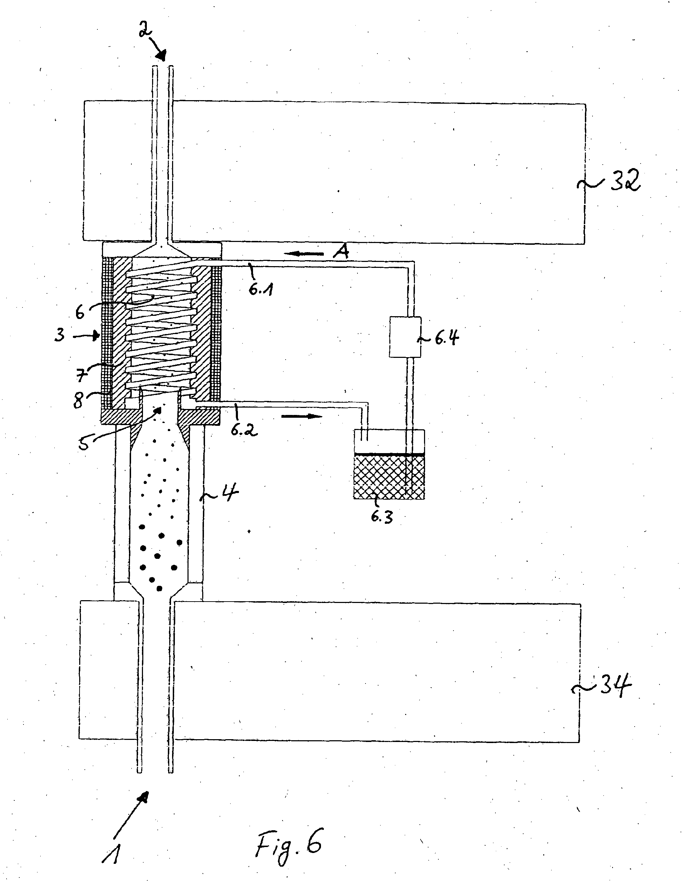

Die Fig. 6 zeigt eine Partikelmesseinrichtung mit einer erfindungsgemäßen Vorrichtung zur Kondensation von Dampf an Kondensationskernen, mit der die Gesamtzahl der Partikel erfasst, größere Partikel, wie beispielsweise über 0,3 µm Durchmesser spektrometrisch hinsichtlich ihrer Größenverteilung bestimmt und darüber hinaus der Anteil der kleineren Partikel (unter etwa 0,3 µm) erfasst werden können.

Hierzu ist dem Einlass 2 der eigentlichen Einrichtung 1 zum Kondensieren von Dampf an Kondensationskernen ein Einlassrohr 31 vorgeordnet, dem ein erstes Aerosolspektrometer 32 zugeordnet ist. Dieses kann in üblicher Weise ausgebildet sein und beispielsweise, insbesondere hinsichtlich seiner optischen Ausgestaltung einen Aufbau haben, wie er in der EP 889 318 A1 und der EP 1 331 475 A1 beschrieben ist.

Dem Aerosolspektrometer 32 schließt sich die erfindungsgemäß Vorrichtung zum Kondensieren von Dampf an Kondensationskernen an, wie sie unter Bezugnahme insbesondere auf die Fig. 1 beschrieben wurde, auf die insofern verwiesen wird. An den Kondensationskamin schließt sich ein Auslassrohr 33 an, dem ein weiteres Aerosolspektrometer 34 zugeordnet ist.

Das Aerosolspektrometer 32 erfasst das durch das Einlassrohr 31 eintretende Aerosol, wie aus Umgebungsluft, Abgasen eines Verbrennungsmotors oder eines Brenners oder dergleichen hinsichtlich Konzentration und Größenverteilung für eingehende Partikel größer etwa 0,3 µm. Die Gesamtheit der - auch kleineren - Partikel bildet Kondensationskerne zur Kondensation von Dampf in der entsprechenden Vorrichtung 1, wobei durch die Kondensation auch Aerosolpartikel kleiner 0,3 µm sich zu Kondensatteilchen entwickeln, die eine Größe über diesem Wert haben und daher ihrer Anzahl nach durch das Aerosolspektrometer 34 erfasst werden können, mit dem damit die Gesamtkonzentration der Partikel in dem eintretenden Partikelstrom erfasst werden kann. Eine Größenbestimmung macht durch das Aerosolspektrometer 34 selbstverständlich hier keinen Sinn mehr, da die durch den Auslasskanal 33 tretenden Teilchen durch die ankondensierte Flüssigkeit vergrößert sind und daher nicht die wahre Teilchengröße erfasst werden kann. Statt des Aerosolspektrometer 34 kann auch ein üblicher herkömmlicher Partikelzähler eingesetzt werden. Aus der Differenz der durch das Aerosolspektrometer 34 (oder einem hier vorgesehenen Partikelzähler) und dem Aerosolspektrometer 32 erfassten Partikelkonzentrationen kann damit auch die Konzentration der Partikel unter 0,3 µm in der Einlassströmung erfasst werden.

### Bezugszeichenliste

- 1: Einrichtung
- 1': Einrichtung
- 2: Einlass
- 3: Verdampfungszone
- 4: Kondensationskamin
- 4.1: Auslass
- 5: Durchlass
- 6: Kanal
- 6a: Boden
- 6b: Seite
- 6c: Wandung
- 6d: Wandung
- 6.1: Kanaleinlass
- 6.2: Kanalauslass
- 6.3: Flüssigkeitsreservoir
- 6.4: Pumpe
- 7: Wandung
- 8: Heizeinrichtung
- 11: Partikelzähler
- 21: Aerosolgenerator
- 22: Kernquelle
- 31: Einlassrohr
- 32: Aerosolspektrometer
- 34: Aerosolspektrometer

## Patentansprüche

1. Verfahren zum Zählen von Partikeln in einer Gasströmung, wobei Partikel als Kondensationskerne mit einem Gas durch den einen Strömungsraum bildenden Innenraum einer Verdampfungszone geführt werden und in diesem Flüssigkeit verdampft wird, **dadurch gekennzeichnet,**
- **dass** zu verdampfende Flüssigkeit derart als Dampf in Kontakt mit dem Strömungsraum gebracht wird, dass ein offener Kanal mit Wandung (6c) und einer offenen Seite (6b) schraubenförmig um den Strömungsraum geführt ist, durch den die Flüssigkeit fließt,
- **dass** der erzeugte Dampf an den mit einem Gas durch den Strömungsraum geführten Kondensationskernen kondensiert, und
- **dass** anschließend die so mit kondensiertem Dampf versehenen Partikel als Kondensatteilchen gezählt werden.

2. Verfahren nach Anspruch 1, **dadurch gekennzeichnet, dass** das Gas zumindest mit einer Bewegungskomponente von oben nach unten durch die Verdampfungszone bewegt wird.

3. Verfahren nach Anspruch 2, **dadurch gekennzeichnet, dass** das Gas durch im Wesentlichen vertikal ausgerichtete Verdampfungszone bewegt wird.

4. Verfahren nach einem der vorangehenden Ansprüche, **dadurch gekennzeichnet, dass** der Einlass der zu verdampfenden Flüssigkeit in die Verdampfungszone oberhalb eines Austrittes für nicht in der Verdampfungszone verdampfte Flüssigkeit angeordnet ist.

5. Verfahren nach einem der Ansprüche 1 bis 4, **dadurch gekennzeichnet, dass** zum Ändern der Dampfmenge der Flüssigkeitsstrom änderbar ist.

6. Verfahren nach einem der vorangehenden Ansprüche, **dadurch gekennzeichnet, dass** die zu verdampfende Flüssigkeit aus einem Vorratsreservoir mittels einer Pumpe in den Strömungsraum gefördert wird.

7. Verfahren nach einem der vorangehenden Ansprüche, **dadurch gekennzeichnet, dass** die zu verdampfende Flüssigkeit durch eine um den Strömungsraum herum angeordnete Heizung erhitzt wird.

8. Verfahren nach Anspruch 7, **dadurch gekennzeichnet, dass** die zu verdampfende Flüssigkeit durch eine um einen den Flüssigkeitskanal aufnehmende, den Strömungsraum umgebenden Zylindermantel herum angeordnet ist.

9. Verfahren nach einem der vorangehenden Ansprüche, **dadurch gekennzeichnet, dass** die Kondensationskerne im Anschluss an den Strömungsraum durch einen und einen nachfolgenden Kondensationskamin bewegt werden.

10. Verfahren nach einem der Ansprüche 1 bis 9, **dadurch gekennzeichnet, dass** zum Erzeugen monodispersen Aerosols Kondensationskerne vorgegebener definierter Konzentration erzeugt werden und Dampf an den Kondensationskernen kondensiert.

11. Verfahren nach Anspruch 10, **dadurch gekennzeichnet, dass** die Partikelgröße der Kondensatteilchen durch die erzeugte Dampfmenge verändert und eingestellt wird.

12. Verfahren nach Anspruch 10 oder 11, **dadurch gekennzeichnet, dass** in Reihe wiederholt, insbesondere zweimal, Dampf zur Kondensation an Kondensationskernen erzeugt wird.

13. Verfahren nach einem der Ansprüche 1 bis 12, **dadurch gekennzeichnet, dass** Partikel einer Partikelströmung gezählt werden, dass zum Zählen von Partikeln geringen Durchmessers anschließend Dampf an den die Kondensationskerne bildenden Partikeln kondensiert, dass die mit Kondensat versehenen Kondensatteilchen nach der Kondensation von Dampf an diesen gezählt werden, und dass die Differenz der vor und nach Kondensation gezählten Teilchenmengen gebildet wird, um derart die Partikel im einströmenden Aerosol unterhalb einer messbaren Grenze zu bestimmen.

14. Einrichtung zum Zählen von Partikeln, mit einem Einlass (2) für Partikel führendes Gas und einer Verdampfungszone (3) für eine Flüssigkeit in einem Strömungsraum des Gases, **dadurch gekennzeichnet,**
- **dass** schraubenförmig um den Strömungsraum (5) ein zu ihm offener, erhitzter Flüssigkeitskanal (6) mit Wandung (6c) und einer offenen Seite (6b) angeordnet ist, durch den die zu verdampfende Flüssigkeit geführt ist, und
- **dass** der Verdampfungszone (3) mit einem nachfolgenden Kondensationskamin ein Partikelzähler oder ein Aerosolspektrometer nachgeordnet sind.

15. Einrichtung nach Anspruch 14, **dadurch gekennzeichnet, dass** ein Einlass in den Strömungsraum (5) an der Oberseite letzterem angeordnet ist.

16. Einrichtung nach Anspruch 14 oder 15, **dadurch gekennzeichnet, dass** der Strömungsraum (5) senkrecht ausgerichtet ist.

17. Einrichtung nach einem der Ansprüche 14 bis 16, **dadurch gekennzeichnet, dass** der Einlass der Flüssigkeit (6.1) in den Flüssigkeitskanal (6) oberhalb des Auslass (6.2) für nicht verdampfte Restflüssigkeit angeordnet ist.

18. Einrichtung nach einem der Ansprüche 14 bis 17, **dadurch gekennzeichnet, dass** dem Einlass (6.1) für die im Strömungsraum (5) zu verdampfende Flüssigkeit ein Flüssigkeitsreservoir (6.3) sowie eine Pumpe (6.4) vorgeordnet sind.

19. Einrichtung nach Anspruch 18, **dadurch gekennzeichnet, dass** vom Auslass (6.2) für die nicht verdampfte Restflüssigkeit eine Leitung zum Reservoir (6.3) führt.

20. Vorrichtung nach einem der Ansprüche 14 bis 19, **gekennzeichnet durch** einen sich an den Strömungsraum (5) anschließenden Kondensationskamin (4) zur Kondensation von Dampf an Kondensationskernen.

21. Vorrichtung nach Anspruch 20, **dadurch gekennzeichnet, dass** der Kondensationskamin (4) senkrecht ausgerichtet und/oder unterhalb des Strömungsraums angeordnet ist.

22. Vorrichtung nach einem der Ansprüche 14 bis 21, **dadurch gekennzeichnet, dass** der Verdampfungszone (3) ein Aerosolgenerator zum Erzeugen eines monodispersen Aerosols vorgeordnet ist.

23. Vorrichtung nach Anspruch 22, **dadurch gekennzeichnet, dass** die Partikelgröße der Kondensatteilchen durch Veränderung der Dampfmenge veränderbar und einstellbar ist.

24. Vorrichtung nach Anspruch 20 oder 21, **dadurch gekennzeichnet, dass** in Reihe mehrere, mindestens zwei Vorrichtungen nach einem der Ansprüche 23 oder 24 angeordnet sind.

25. Vorrichtung nach einem der Ansprüche 14 bis 24, **dadurch gekennzeichnet, dass** der Verdampfungszone (3) ein erster Partikelzähler zum Zählen von Teilchen geringen Durchmessers vorgeordnet und der Verdampfungszone ein weiterer Partikelzähler jeweils ggf. in Form eines Aerosolspektrometers, nachgeordnet ist.

## Claims

1. Method for counting particles in a gas flow, wherein particles as condensation nuclei are guided with a gas through the internal space, forming a flow space, of a vaporizing region and liquid is vaporized in this space, **characterized**
- **in that** liquid to be vaporized is brought into contact as vapour with the flow space such that an open duct with a wall (6c) and an open side (6b) is guided helically around the flow space through which the liquid flows,
- **in that** the vapour generated condenses on the condensation nuclei guided with a gas through the flow space, and
- **in that** the particles thus provided with condensed vapour are then counted as condensate particles.

2. Method according to Claim 1, **characterized in that** the gas is moved through the vaporizing region at least with a downward movement component.

3. Method according to Claim 2, **characterized in that** the gas is moved through the substantially vertically oriented vaporizing region.

4. Method according to one of the preceding claims, **characterized in that** the inlet for the liquid to be vaporized into the vaporizing region is arranged above an outlet for liquid not vaporized in the vaporizing region.

5. Method according to one of Claims 1 to 4, **characterized in that** the flow of liquid can be altered in order to change the quantity of vapour.

6. Method according to one of the preceding claims, **characterized in that** the liquid to be vaporized is supplied from a supply reservoir into the flow space by means of a pump.

7. Method according to one of the preceding claims, **characterized in that** the liquid to be vaporized is heated by a heating arrangement arranged around the flow space.

8. Method according to Claim 7, **characterized in that** the liquid to be vaporized is heated by a heating arrangement arranged around a cylinder jacket which accommodates the liquid duct and surrounds the flow space.

9. Method according to one of the preceding claims, **characterized in that** the condensation nuclei are moved, at the connection to the flow space, through a throat and a subsequent condensation flue.

10. Method according to one of Claims 1 to 9, **characterized in that**, in order to generate a monodisperse aerosol, condensation nuclei of predetermined defined concentration are generated and vapour condenses on the condensation nuclei.

11. Method according to Claim 10, **characterized in that** the particle size of the condensate particles is changed and set by the quantity of vapour generated.

12. Method according to Claim 10 or 11, **characterized in that** steam for condensing onto condensation nuclei is generated repeatedly, in particular twice in a row.

13. Method according to one of Claims 1 to 12, **characterized in that** particles of a particle flow are counted, **in that** for counting small-diameter particles vapour then condenses onto particles forming the condensation nuclei, **in that** the condensate particles provided with condensate are counted after vapour has condensed thereon, and **in that** the difference in the particle quantities counted before and after condensation is established in order to thus identify the particles in the inflowing aerosol below a measurable limit.

14. Device for counting particles, with an inlet (2) for particle-carrying gas and a vaporizing region (3) for a liquid in a flow space of the gas, **characterized**
- **in that** a heated liquid duct (6) which is open to the flow space (5) and has a wall (6c) and an open side (6b) is arranged helically around the flow space (5), and the liquid to be vaporized is guided through this duct, and
- **in that** a particle counter or an aerosol spectrometer is arranged downstream of the vaporizing region (3) with a subsequent condensation flue.

15. Device according to Claim 14, **characterized in that** an inlet into the flow space (5) is arranged on the upper side of the latter.

16. Device according to Claim 14 or 15, **characterized in that** the flow space (5) is oriented vertically.

17. Device according to one of Claims 14 to 16, **characterized in that** the inlet (6.1) for the liquid into the liquid duct (6) is arranged above the outlet (6.2) for unvaporized residual liquid.

18. Device according to one of Claims 14 to 17, **characterized in that** a liquid reservoir (6.3) and a pump (6.4) are arranged upstream of the inlet (6.1) for the liquid to be vaporized in the flow space (5).

19. Device according to Claim 18, **characterized in that** a line leads from the outlet (6.2) for the unvaporized residual liquid to the reservoir (6.3).

20. Device according to one of Claims 14 to 19, **characterized by** a condensation flue (4), connected to the flow space (5), for condensing vapour onto condensation nuclei.

21. Device according to Claim 20, **characterized in that** the condensation flue (4) is oriented vertically and/or is arranged below the flow space.

22. Device according to one of Claims 14 to 21, **characterized in that** an aerosol generator for generating a monodisperse aerosol is arranged upstream of the vaporizing region (3).

23. Device according to Claim 22, **characterized in that** the particle size of the condensate particles can be changed and set by changing the quantity of vapour.

24. Device according to Claim 20 or 21, **characterized in that** multiple, at least two, devices according to either of Claims 23 and 24 are arranged in series.

25. Device according to one of Claims 14 to 24, **characterized in that** a first particle counter for counting small-diameter particles is arranged upstream of the vaporizing region (3) and a further particle counter, in each case optionally in the form of an aerosol spectrometer, is arranged downstream of the vaporizing region.

## Revendications

1. Procédé de comptage de particules dans un flux de gaz, les particules en forme de noyaux de condensation étant guidées avec un gaz à travers un espace intérieur, formant un espace d'écoulement, d'une zone d'évaporation et étant évaporées dans ce fluide, **caractérisé en ce que** :
- le fluide à évaporer est amené de telle sorte, sous la forme de vapeur, en contact avec l'espace d'écoulement qu'un canal ouvert doté d'une paroi (6c) et d'un côté ouvert (6b) et à travers lequel le fluide circule est guidé en forme de vis autour de l'espace d'écoulement ;
- la vapeur produite se condense au niveau des noyaux de condensation conduits avec un gaz à travers l'espace d'écoulement ; et
- les particules ainsi pourvues de vapeur condensées sont ensuite comptées sous la forme de fragments de condensat.

2. Procédé selon la revendication 1, **caractérisé en ce que** le gaz est au moins déplacé à travers la zone d'évaporation avec une composante de déplacement orientée de haut en bas.

3. Procédé selon la revendication 2, **caractérisé en ce que** le gaz est déplacé à travers la zone d'évaporation orientée pour l'essentiel verticalement.

4. Procédé selon l'une quelconque des revendications précédentes, **caractérisé en ce que** l'admission du fluide à évaporer est disposée dans la zone d'évaporation, au-dessus d'une sortie prévue pour le fluide non évaporé dans la zone d'évaporation.

5. Procédé selon l'une quelconque des revendications 1 à 4, **caractérisé en ce que** pour modifier la quantité de vapeur, le flux de fluide peut varier.

6. Procédé selon l'une quelconque des revendications précédentes, **caractérisé en ce que** le fluide à évaporer est extrait d'un réservoir à l'aide d'une pompe placée dans l'espace d'écoulement.

7. Procédé selon l'une quelconque des revendications précédentes, **caractérisé en ce que** le fluide à évaporer est chauffé au moyen d'un chauffage entourant l'espace d'écoulement.

8. Procédé selon la revendication 7, **caractérisé en ce que** le fluide à évaporer est disposé à travers une enveloppe cylindrique recevant le canal de fluide et entourant l'espace d'écoulement.

9. Procédé selon l'une quelconque des revendications précédentes, **caractérisé en ce que** les noyaux de condensation sont déplacés à travers une cheminée de condensation et une cheminée de condensation suivante dans la jonction prévue au niveau de l'espace d'écoulement.

10. Procédé selon l'une quelconque des revendications 1 à 9, **caractérisé en ce que** pour produire des aérosols monodispersibles, des noyaux de condensation de concentration définie prédéterminée sont produits et que de la vapeur est condensée au niveau des noyaux de condensation.

11. Procédé selon la revendication 10, **caractérisé en ce que** la taille de particule des fragments de condensat est modifiée et réglée par le biais de la quantité de vapeur produite.

12. Procédé selon la revendication 10 ou 11, **caractérisé en ce que** de la vapeur à condenser au niveau des noyaux de condensation est produite de façon répétée en ligne, notamment deux fois.

13. Procédé selon l'une quelconque des revendications 1 à 12, **caractérisé en ce que** des particules d'un flux de particules sont comptées, qu'ensuite de la vapeur est condensée au niveau des particules formant les noyaux de condensation pour compter les particules de diamètre réduit, que les fragments de condensat pourvus de condensat sont comptés au niveau de la vapeur après condensation de celle-ci et que la différence des quantités de fragments comptés avant et après la condensation est établie pour ainsi déterminer les particules contenues dans l'aérosol s'écoulant lorsque celles-ci se trouvent en dessous d'une limite mesurable.

14. Dispositif de comptage de particules, avec une admission (2) prévue pour un gaz conduisant des particules et une zone d'évaporation (3) pour un fluide placé dans un espace d'écoulement du gaz, **caractérisé en ce que** :
- un canal de fluide (6) chauffé ouvert vers l'espace d'écoulement, doté d'une paroi (6c) et d'un côté ouvert (6b) et à travers lequel le fluide à évaporer circule, est guidé en forme de vis autour de l'espace d'écoulement ; et
- un compteur de particules ou un spectromètre d'aérosol sont placés en aval de la zone d'évaporation (3) avec une cheminée de condensation suivante.

15. Dispositif selon la revendication 14, **caractérisé en ce qu'**une admission est disposée dans l'espace d'écoulement (5) au niveau du côté supérieur de ce dernier.

16. Dispositif selon la revendication 14 ou 15, **caractérisé en ce que** l'espace d'écoulement (5) est orienté verticalement.

17. Dispositif selon l'une quelconque des revendications 14 à 16, **caractérisé en ce que** l'admission du fluide (6.1) dans le canal de fluide (6) est disposée au-dessus de la sortie (6.2) prévue pour le fluide restant non évaporé.

18. Dispositif selon l'une quelconque des revendications 14 à 17, **caractérisé en ce qu'**un réservoir de fluide (6.3) ainsi qu'une pompe (6.4) sont placés en amont de l'admission (6.1) prévue pour le fluide à évaporer dans l'espace d'écoulement (5).

19. Dispositif selon la revendication 18, **caractérisé en ce qu'**une conduite conduit au réservoir (6.3) en partant de la sortie (6.2) pour le fluide restant non évaporé.

20. Dispositif selon l'une quelconque des revendications 14 à 19, **caractérisé par** la présence d'une cheminée de condensation (4) raccordée à l'espace d'écoulement (5) et servant à la condensation de vapeur au niveau des noyaux de condensation.

21. Dispositif selon la revendication 20, **caractérisé en ce que** la cheminée de condensation (4) est orientée verticalement et/ou en dessous de l'espace d'écoulement.

22. Dispositif selon l'une quelconque des revendications 14 à 21, **caractérisé en ce qu'**un générateur d'aérosol est placé en amont de la zone d'évaporation (3) pour produire un aérosol monodispersible.

23. Dispositif selon la revendication 22, **caractérisé en ce que** la taille de particule des fragments de condensat peut varier et être réglée en modifiant la quantité de vapeur.

24. Dispositif selon la revendication 20 ou 21, **caractérisé en ce que** plusieurs dispositifs selon l'une quelconque des revendications 23 ou 24, notamment au moins deux, sont disposés en ligne.

25. Dispositif selon l'une quelconque des revendications 14 à 24, **caractérisé en ce qu'**un premier compteur de particules est disposé en amont de la zone d'évaporation (3) pour compter des fragments de diamètre réduit et qu'un compteur de particules supplémentaire est respectivement placé en amont le cas échéant de la zone d'évaporation, sous la forme d'un spectromètre d'aérosol.
